# EUROPÄISCHE PATENTSCHRIFT

(11) **EP 2 332 792 B1**
(45) Veröffentlichungstag und Bekanntmachung des Hinweises auf die Patenterteilung: **13.07.2016**
(21) Anmeldenummer: 11156362.3
(22) Anmeldetag: 25.01.2008
(51) Int. Cl.: B60S 1/38

(54) **Wischgummi und Verfahren zu seiner Herstellung**
Wiper blade rubber and production method
Raclette d'essuie glace et methode de production

(30) Priorität: 19.03.2007 DE 102007012924
(43) Veröffentlichungstag der Anmeldung: 15.06.2011
(62) Teilanmeldung aus: 08708213.7
(73) Patentinhaber: Robert Bosch GmbH, 70442 Stuttgart (DE)
(72) Erfinder: Van De Rostyne, Kris, 3360, Opvelp (BE); Lay, Reiner, 52072, Aachen (DE); Duval, Vincent, 1030, Bruxelles-Schaerbeek (BE); Pironnet, Marc, 3300, Hakendover (Tienen) (BE); Clerx, Bart, 3746, Bilzen (BE); Buseyne, Wim, 3500, Hasselt (BE)

(56) Entgegenhaltungen:
- EP-A2- 1 059 213
- EP-A2- 1 249 280
- WO-A1-03/080717
- DE-A1- 10 025 629
- DE-A1- 19 741 225
- DE-A1- 19 814 804
- DE-A1-102005 000 851
- FR-A- 2 882 558
- FR-A- 2 886 251
- FR-A1- 2 811 325
- US-A1- 2004 237 229

## Beschreibung

### Stand der Technik

Die Erfindung bezieht sich auf ein Wischgummi für einen Scheibenwischer, insbesondere auf einen Scheibenwischer eines Kraftfahrzeuges gemäß dem Oberbegriff des Anspruchs 1. Weiterhin bezieht sie sich auf ein Verfahren zu seiner Herstellung nach dem Oberbegriff des Anspruchs 8.

Die zu einem Wischerblatt eines Scheibenwischers gehörenden Wischgummis oder Wischleisten, die beispielsweise zur Entfernung von Wassertropfen auf einer Windschutzscheibe eines Kraftfahrzeuges dienen, werden mit den Scheibenwischern einer Scheibenwischanlage hin- und herbewegt. Üblicherweise werden Wischgummis aus einem hydrophoben extrudierten oder spritzgegossenen Ausgangsmaterial, beispielsweise aus einem unvulkanisierten, synthetischen Kautschuk, geformt und anschließend vulkanisiert. Die allgemeinen Anforderungen, die an ein Wischgummi gestellt werden, umfassen neben einer hohen Wischqualität auch Beständigkeit gegen Abrieb, geringen Reibungswiderstand und günstige Gleiteigenschaften auf hydrophilen und hydrophoben Flächen, um ein entsprechendes Laufverhalten des Wischgummis auf den unterschiedlichen Flächen zu erreichen.

Im Allgemeinen werden gute Wischqualitäten mit relativ weichen Wischgummiqualitäten erreicht, die aber häufig aufgrund eines hohen Reibungskoeffizienten ein ungünstiges Laufverhalten insbesondere auf hydrophoben Flächen zeigen. Im Stand der Technik ist bekannt, die Oberfläche des Wischgummis einer Nachbehandlung zu unterwerfen, um ein besseres Laufverhalten des Wischgummis zu erzielen. Beispielsweise wird die Oberfläche mit einem Halogen behandelt, d.h. es wird eine Chlorierung oder Bromierung durchgeführt. Dadurch wird die Oberfläche des Wischgummis gehärtet, so dass der Reibungskoeffizient des relativ weichen Gummimaterials des Wischgummis herabgesetzt wird. Auch wenn bei herabgesetztem Reibungskoeffizienten der Reibungswiderstand reduziert wird, reicht dies in der Regel nicht aus, um das Laufverhalten des Wischgummis deutlich zu verbessern. Darüber hinaus zeigen derart nachbehandelte Oberflächen häufig einen niedrigen Kontaktwinkel gegenüber Wasser auf, d.h. sie sind nicht ausgeprägt hydrophob, wodurch insbesondere auf hydrophoben Flächen die Wischqualität nicht optimal ist.

Bekannt ist auch, eine Verbesserung des Laufverhaltens des Wischgummis durch eine Beschichtung der Oberfläche zu erzielen. So ist bekannt, auf die Oberfläche eines Wischgummis eine Schicht aufzubringen, welche üblicherweise ein feines, aber schmierendes Pulver, beispielsweise pulverförmiges Molybdändisulfid oder Graphit, enthält. Für derartige Beschichtungen ist im Stand der Technik eine Vielzahl weiterer Materialien bekannt. DE 10 2005 000 851 A1 beschreibt zum Beispiel ein Wischblatt mit einem durch Vulkanisation erhaltenen Wischgummi, auf dessen Wischgummilippe eine Folie oder eine Granulatschicht zur Reduzierung des Reibwertes aufgebracht ist. Das Beschichtungsmaterial kann aufgespritzt, aufgesprüht oder auf andere Weise auf die elastomere Oberfläche aufgetragen werden.

Eine weitere Form der Beschichtung der Oberfläche eines Wischgummis sieht das Aufbringen eines Gleitlacks vor, um den Trockenreibwert möglichst weit herabzusetzen. In DE 101 16 926 A werden Gleitlackkomponenten, Gleitlack und ein entsprechendes Verfahren zum Beschichten von Elastomeren beschrieben, wobei die Gleitlackkomponeten neben einem Polyurethan und einem Siloxan ein Polyamidpulver, ein Polyethylenpulver oder eine Lösung eines Polyamids umfassen. Der Gleitlack kann einen Härter auf Isocyanat-Basis enthalten.

Die erzeugten Oberflächen sind bei einer Beschichtung mit einem Gleitlack, einer Folie oder einer Granulatschicht in der Regel geschlossen, d.h. die aufgebrachte Beschichtung bildet eine neue Oberfläche, so dass die darunter liegende elastomere Oberfläche vollständig abgedeckt wird. Die durch eine Pulverbeschichtung erzeugte Oberfläche ist im allgemeinen nicht geschlossen, so dass die darunter liegende elastomere Oberfläche teilweise sichtbar ist.

Im Allgemeinen ist über die Oberflächen von Wischgummis bezüglich ihres Verhaltens gegenüber Wasser, d.h. über ihre Hydrophobizität wenig bekannt. Ein Maß für den Ausprägungsgrad der Hydrophobie von Stoffen ist ihre Hydrophobizität, welche in Form eines Kontaktwinkels angegeben werden kann, der sich zwischen einem Tropfen Flüssigkeit, beispielsweise Wasser und der Oberfläche des Stoffes mit Luft als dritter Phase einstellt. Eine Oberfläche mit einem Kontaktwinkel von größer 90° wird als hydrophob bezeichnet, bei Kontaktwinkeln größer als 120° kann die Oberfläche als hochhydrophob bezeichnet werden, bei Kontaktwinkeln größer als 150° als superhydrophob. Besonders günstige Wischqualitäten von Wischgummis werden erreicht, wenn die Oberfläche hochhydrophob ist, d.h. einen Kontaktwinkel von größer 120° zeigt.

Aus EP 1 249 280 sind selbstreinigende Oberflächen und ein Verfahren zu ihrer Herstellung bekannt, wobei auf eine Oberfläche hydrophobe Partikel mit einer Größe im Mikrometerbereich bis Submikrometerbereich aufgebracht werden, welche wiederum eine zerklüftete Struktur im Nanometerbereich aufweisen. Diese Oberflächen zeigen einen hohen Ausprägungsgrad der Hydrophobizität mit Kontaktwinkeln größer 150°.

FR 2 882 558 offenbart ein Wischgummi gemäß dem ersten Teil des Anspruchs 1.

### Offenbarung der Erfindung

Das erfindungsgemäß ausgebildete Wischgummi für einen Scheibenwischer, insbesondere für einen Scheibenwischer eines Kraftfahrzeuges, aus einem geformten, vulkanisierbaren elastomeren Material ist dadurch gekennzeichnet, dass die Oberfläche des Wischgummis eine Oberflächenschicht aufweist, welche hydrophob ist mit einem Kontaktwinkel gegenüber Wasser größer 90 °, bevorzugt größer 120° und einer Oberflächenstruktur mit Erhebungen und Vertiefungen im Mikrometerbereich.

Vorteil der vorliegenden Erfindung ist es, die Wischqualität eines Wischgummis zu erhöhen, so dass die Wischleistung auf einer hydrophilen Oberfläche, beispielsweise einer mit einem Wasserfilm benetzten Windschutzscheibe, als auch das Laufverhalten des Wischgummis auf einer hydrophoben Oberfläche verbessert ist.

Vorteilhaft ist, dass die Hydrophobizität des Wischgummis deutlich höher ist, als dies durch Beschichtungen bzw. Oberflächenbehandlungen wie sie aus dem Stand der Technik bekannt sind, erreicht wird. Weiterhin vorteilhaft ist, dass durch die erhöhte Hydrophobizität die Wischqualität des Wischgummis wesentlich gesteigert ist. Ein weiterer Vorteil der vorliegenden Erfindung ist in einer Strukturierung der Oberfläche des Wischgummis zu sehen, da somit eine selbstreinigende Wirkung der Wischgummioberfläche erreicht wird, welche durch eine hohe Hydrophobizität und eine Struktur der Oberfläche des Wischgummis bedingt ist.

Das erfindungsgemäße Verfahren zur Herstellung eines Wischgummis hat gegenüber dem Stand der Technik den Vorteil, dass bei einer erfindungsgemäßen Oberflächenbehandlung des Wischgummis kein freies Chlor oder Brom entsteht, da kein Behandlungsschritt, der eine Halogenierung des Wischgummis einschließt, erforderlich ist. Ein weiter Vorteil liegt darin, dass die Kosten der Oberflächenbehandlung reduziert werden können, da auf eine Halogenierung der Oberfläche des herzustellenden Wischgummis verzichtet werden kann. Darüber hinaus sind die einzelnen Verfahrensschritte in günstiger Weise miteinander verknüpft, so dass Kosten reduziert werden können.

Erfindungsgemäß erfolgt eine Hydrophobierung und Strukturierung der Oberfläche von Wischgummis vorzugsweise durch den Einsatz von Pulvern oder Folien zur Beschichtung der Oberfläche des Wischgummis.

Die Hydrophobizität einer Oberfläche, d.h. das Maß für den Ausprägungsgrad der Hydrophobie, kann in Form des Kontaktwinkels angegeben werden, der den Winkel bezeichnet, den ein Flüssigkeitstropfen auf der Oberfläche eines Feststoffes zu dieser Oberfläche bildet. Bei Kontaktwinkeln größer 90° wird die Oberfläche als hydrophob bezeichnet, bei Kontaktwinkeln größer 120° als hochhydrophob, bei Kontaktwinkeln größer als 150°C als superhydrophob. Bei Kontaktwinkeln größer als 160° nehmen die aufgebrachten Flüssigkeitstropfen nahezu Kugelform an, so dass sie von der Oberfläche abperlen können. Dabei können Schmutzpartikel, welche lose auf der Oberfläche aufliegen, von den abrollenden Flüssigkeitstropfen weggespült werden. Dieses Extrembeispiel einer hydrophoben Oberfläche mit einem Kontaktwinkel von über 160 ° wurde bei den Blättern und Blüten des Lotus beobachtet. Das als Lotuseffekt bezeichnete Erscheinungsbild bezieht sich auf die äußerst geringe Benetzbarkeit und den hohen Selbstreinigungseffekt von den Oberflächen des Lotus. Die Ursache dieses Effekts liegt in einer besonderen mikro- und nanostrukturierten, superhydrophoben Oberfläche mit Erhebungen, welche 5 bis 20 µm hoch und 5 bis 50 µm voneinander entfernt sind. Dieses Prinzip der Natur machte sich unter anderem die Technik zu Nutze, um selbstreinigende Oberflächen für eine Vielzahl von Anwendungen zu erzeugen.

In Anlehnung an den Lotuseffekt wird bei dem erfindungsgemäßen Wischgummi durch ein erfindungsgemäßes Verfahren eine hydrophobe Oberfläche des Wischgummis mit einem Kontaktwinkel gegenüber Wasser größer 90 °, bevorzugt größer 120° erzeugt. Die dabei erzeugte Oberfläche ist nicht glatt bzw. geschlossen, sondern vielmehr strukturiert bzw. nicht geschlossen.

Zur Erzeugung des erfindungsgemäßen Wischgummis wird die Oberfläche eines elastomeren Materials beschichtet. Beispielsweise wird hierfür ein Pulver eingesetzt. Als Pulver wird im Zusammenhang mit dieser Anmeldung ein Gemisch eines Feststoffes bezeichnet, welches sich Vorteilhafterweise aus einzelnen Partikeln mit einer Partikelgrößenverteilung kleiner als 100 µm, bevorzugt kleiner als 50 µm zusammensetzt. Für eine andere Form der Beschichtung kann erfindungsgemäß eine Folie eingesetzt werden. In diesem Zusammenhang wird als Folie eine zusammenhängende Fläche eines geeigneten Materials bezeichnet, die eine möglichst konstante Dicke über die Fläche aufweist. Unter einer strukturierten Oberfläche im Sinne der Anmeldung wird eine Oberfläche bezeichnet, welche eine gewisse Rauhigkeit aufweist, d.h. Erhebungen bzw. Vertiefungen hat, wodurch eine Unebenheit der Oberfläche vorzugsweise im Mikrometerbereich erzielt wird. Hierbei weisen die Erhebungen bzw. Vertiefungen im µm Bereich einen gewissen Abstand zueinander auf, der kleiner ist als 200 µm, bevorzugt kleiner als 100 µm und besonders bevorzugt kleiner als 50 µm ist. Die Struktur der Oberfläche kann beispielsweise über Hohlräume, Spitzen und/oder Zacken gebildet werden.

Erfindungsgemäß wird durch eine Beschichtung der Oberfläche eines Wischgummis eine hydrophobe Oberfläche erzielt, mit einem Kontaktwinkel größer als 90°, bevorzugt wird eine hochhydrophobe Oberfläche mit einem Kontaktwinkel größer als 120° erzeugt. Die Oberfläche weist erfindungsgemäß eine Struktur auf, welche Erhebungen bzw. Vertiefungen umfasst, die im Mittel eine Höhe von 1 bis 100 µm aufweisen, vorzugsweise im Mittel eine Höhe von 1 bis 50 µm, wobei die Erhebungen bzw. Vertiefungen einen Abstand von 1 bis 200 µm, vorzugsweise von 1 bis 100 µm, bevorzugt von 1 bis 50 µm zueinander haben.

Materialien, die sich für eine erfindungsgemäße Beschichtung der Oberfläche eines Wischgummis eignen, sind beispielsweise thermoplastische Materialien, wie Polyethylen, Polyamid, Polypropylen, Polytetrafluorethylen, sowie Mineralien, Silikate auch in modifizierter Form, Ruß, Metalloxide und Metallpulver oder Mischungen davon. Somit können aufgrund der Vielfalt der verwendbaren Materialien die angestrebten Produkteigenschaften des Wischgummis realisiert werden, d.h. ein günstiges Laufverhalten und gute Wischqualitäten. Die erfindungsgemäße Beschichtung der Oberfläche des Wischgummis kann durch Aufbringen eines Pulvers oder durch Aufbringen einer vorbehandelten oder einer in einem Nachbehandlungsschritt zu strukturierenden Folie erfolgen. Die Beschichtung der Oberfläche des Wischgummis bedeutet hier die Erzeugung einer Oberflächenschicht, welche auf die Oberfläche eines Wischgummis aufgebracht und mit dieser verbunden wird. Die Schichtdicke der erfindungsgemäßen Oberflächenschicht liegt in einem Bereich von 1 bis 100 µm, bevorzugt im Bereich von 1 bis 50 µm.

Ein Wischgummi umfasst einen stabförmigen Grundabschnitt und einen gleitenden Abschnitt mit einer Lippe in Form eines dünnen Streifens. Bisherige Verfahren zur Herstellung von Wischgummis sehen aus wirtschaftlichen Gründen die gleichzeitige Herstellung von Doppelprofilen vor, wobei die entsprechenden Profil kontinuierlich aus vulkanisierbarem Polymermischungen extrudiert, vulkanisiert und anschließend voneinander getrennt werden. Als Ausgangsmaterial eines Wischgummis für Scheibenwischer, insbesondere für Scheibenwischer von Kraftfahrzeugen, dient ein Gummimaterial aufgrund seiner hohen Biegsamkeit, damit Wasser beim Wischvorgang sauber von der Glasoberfläche einer Windschutzscheibe entfernt werden kann. Geeignete Ausgangsmaterialien für ein Wischgummi sind Ethylenpropylendienmonomer (EPDM), Ethylenpropylenmonomer (EPM), Chloroprenkautschuk (CR), Naturkautschuk (NR) und Mischungen derselben.

### Kurze Beschreibung der Zeichnung

Ausführungsformen der Erfindung sind in den Zeichnungen dargestellt und in der nachfolgenden Beschreibung näher erläutert.

Es zeigen:
- Figur 1: ein Einzelprofil 1 eines Wischgummis 2,
- Figur 2: eine Rasterelektronenmikroskop-Aufnahme der Oberfläche eines erfindungsgemäßen Wischgummis und
- Figur 3: ein erfindungsgemäßes Wischgummi mit einer hydrophoben Oberflächenschicht im Einsatz auf einer hydrophoben Fläche zur Entfernung von Wasser.

### Ausführungsformen der Erfindung

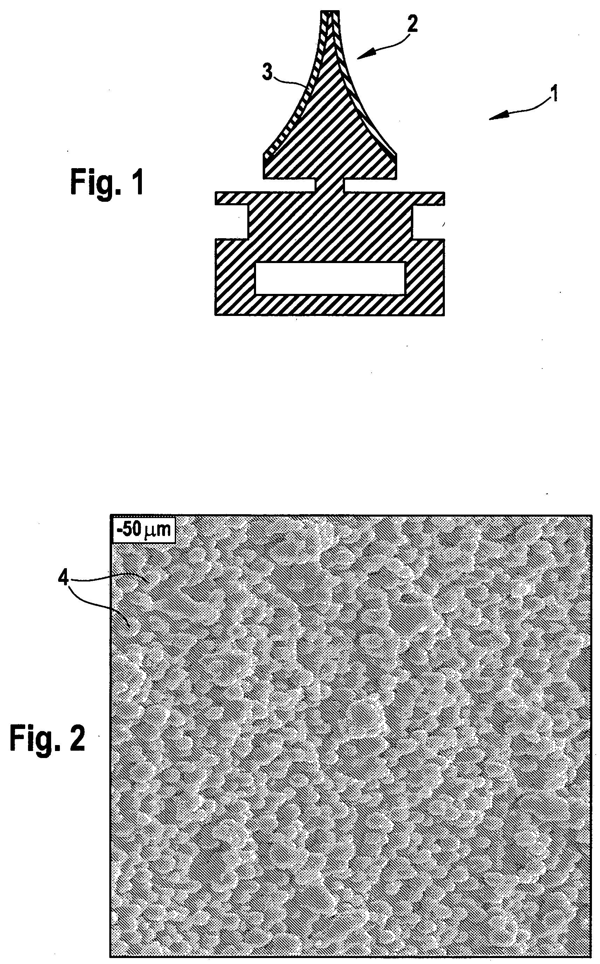

Figur 1 zeigt ein Einzelprofil 1 eines Wischgummis 2 mit einer gemäß einer Ausführungsform der Erfindung nach dem Vulkanisieren und einem evtl. Reinigungsschritt auf beiden Seiten des Wischgummis 2 aufgebrachten Oberflächenschicht 3.

Die hydrophobe und strukturierte Oberflächenschicht 3 des erfindungsgemäßen Wischgummis 2 ist durch die Rasterelektronenmikroskop-Aufnahme (REM-Aufnahme) in Figur 2 verdeutlicht. Mit 4 werden die Partikel bezeichnet, welche auf der Oberfläche des Wischgummis 2 aufgetragen und mit dieser verbunden werden.

Das Verfahren, mit dem Vorteilhafterweise die Oberflächenschicht 3 mit hydrophober Eigenschaft und Oberflächenstruktur erzielt wird, umfasst das Aufbringen bzw. Auftragen von Partikeln 4 oder einer Folie, welche aus einem geeigneten Material in einem getrennten, nicht näher beschriebenem Verfahren hergestellt wurde. Die aufgebrachten Partikel 4 bzw. die aufgebrachte Folie wird mit der Oberfläche des Wischgummis 2 verbunden, so dass eine Oberflächenschicht 3 mit der angestrebten hydrophoben Eigenschaft und der Strukturierung im Mikrometerbereich entsteht. Des Weiteren kann in einer Ausführungsform die gebildete Oberflächenschicht 3 in nachfolgenden Schritten weiter hydrophobiert und/oder strukturiert werden, so dass die bevorzugte hochhydrophobe Oberfläche und die bevorzugte Struktur mit den Erhebungen und/oder Vertiefungen im Mikrometerbereich gebildet werden.

Vorzugsweise sind die Partikel zur Herstellung der angestrebten Oberflächenschicht 3 des Wischgummis 2 hydrophob, die zu der Ausbildung der hydrophoben Oberflächenschicht 3 des Wischgummis 2 führen. Die Partikel 4 können dabei selbst entsprechend hydrophob sein oder sie werden vor dem Auftragen oder auch nach dem Auftragen hydrophobiert. Das Hydrophobieren kann auf eine aus dem Stand der Technik bekannte Weise erfolgen.

Gemäß einer Ausführungsform des erfindungsgemäßen Verfahrens zur Herstellung des Wischgummis 2 wird ein Partikelgemisch auf die Oberfläche des Wischgummis 2 mit Hilfe eines Pulverlackierverfahrens aufgetragen. Als Pulver kann ultrahochmolekulares Polyethylen mit einer mittleren Partikelgröße von 10 µm auf die Oberfläche aufgebracht werden. Hierbei werden in Luft dispergierte Partikel 4 durch spezielle Sprüheinrichtungen mit Pressluft auf die Oberfläche des Wischgummis 2 beispielsweise zu beiden Seiten eines Döppelprofils aufgetragen, welches nachfolgend getrennt wird, so dass die Spitze des Wischgummis, welche nicht in Kontakt mit der Scheibe steht, ohne Beschichtung ist. Das Pulver 4 kann auf eine vulkanisierte oder bevorzugt auf eine nicht vulkanisierte Oberfläche des Wischgummis 2 aufgespritzt werden. Durch die guten Klebeeigenschaften des Gummis ist eine elektrostatische Aufladung der aufzubringenden Partikel 4 des Pulvers nicht unbedingt notwendig. Bei einer elektrostatischen Aufladung sind die Partikel 4 des aufgespritzten Gemischs vorzugsweise gleich geladen, so dass sie einander abstoßen, wodurch eine gleichmäßige Auftragung der Partikel 4 auf der Oberfläche des Wischgummis 2 möglich ist. Die Partikel 4 des aufgespritzten Gemischs oder auch die Oberfläche des Wischgummis 2 können vorzugsweise durch eine elektrostatische Kontaktierung elektrostatisch aufgeladen werden, wodurch eine verbesserte Haftung der Partikel 4 auf der Oberfläche erreicht wird. Dem Pulverlackierverfahren folgt vorzugsweise eine Hitzebehandlung, um ein dauerhaftes Anhaften und eine gleichmäßige dichte Beschichtung des Wischgummis zu erreichen.

Eine weitere Möglichkeit um die Oberfläche des Wischgummis 2 mit den Partikeln zu beschichten, stellt das Nasslackierverfahren dar. Hierbei werden die Partikel 4 in einem geeigneten Suspensionsmedium suspendiert und die entstehende stabile Suspension wird auf die Oberfläche des Wischgummis 2 aufgetragen. Das Auftragen der Suspension kann durch geeignete Beschichtungsverfahren erfolgen. Dies sind zum Beispiel Tauchlackierung oder Aufsprühen.

Die Partikel 4 können aber auch mittels Wirbelsintern aufgebracht werden. Hierbei wird das Wischgummi 2 kurz in ein mit Hilfe von Druckluft fluidisiertes Partikelgemisch getaucht, die Partikel 4 haften an der eingetauchten Oberfläche. In einem folgenden Schritt können dann die Partikel 4 durch Erhitzen auf die Oberfläche aufgeschmolzen werden, Alternativ kann das Wischgummi 2 vor dem Eintauchen in ein fluidisiertes Partikelgemisch erhitzt werden. Durch die Temperatur an der Oberfläche des Wischgummis 2 schmelzen die Partikel 4 und überziehen die Oberfläche mit einer durchgehenden Beschichtung. Damit eine gleichmäßige Beschichtung mit konstanter Dicke erzielt wird, muss darauf geachtet werden, dass die Partikel 4 nicht durch eventuell anwesende Fremdstoffe zu größeren Verbänden agglomerieren.

Eine weitere Alternative der Auftragung der Partikel 4 auf die Oberfläche des Wischgummis 2 ist gegeben durch ein Aufschleudern der Partikel z.B. mit Hilfe eines Dosierrades oder mit rotierenden Bürsten.

Die Partikel 4 werden vorzugsweise derart auf die Oberfläche eines Wischgummis 2 aufgebracht, dass eine Oberflächenschicht 3 mit konstanter Dichte und Dicke gebildet wird. Vorteilhafterweise wird durch die aufgebrachten Partikel eine hydrophobe und strukturierte Oberfläche erzielt. Vorzugsweise steht die Menge an haftenden Partikeln 4 auf der Oberfläche des Wischgummis 2 in Zusammenhang zu der Klebekraft des Wischgummimaterials bei den herrschenden Bedingungen, wie beispielsweise Temperatur und Druck. Ein Überschuss an Partikeln 4 kann durch gezieltes Abblasen mit Pressluft oder durch eine Absaugeinrichtung wieder von der Oberfläche entfernt werden.

Zusätzlich oder alternativ zu der Klebekraft des Wischgummimaterials kann die Haftung der Partikel 4 auf der Oberfläche durch eine Vorbehandlung der Oberfläche des Wischgummis 2, beispielsweise mit einem Primer unterstützt werden. Als Primer wird eine auf die Oberfläche eines Wischgummis 2 aufgetragene Materialschicht bezeichnet, an der die Partikel zunächst haften. In einem sich anschließenden Schritt kann der Primer, soweit er nicht als Klebemittel fungiert, beispielsweise wieder durch Verdunsten entfernt werden. Vorzugsweise wird als Primer ein Solvent verwendet, in welchem die Partikel dispergiert sind, wobei nach Aufsprühen der Dispersion das Solvent verdampft und eine homogene Beschichtung konstanter Dicke und Dichte erwirkt.

In einer Ausführungsform werden die aufgebrachten Partikel 4 in einem weiteren Schritt mit der Oberfläche des Wischgummis 2 verbunden. Nach dem Auftragen der Partikel werden vorzugsweise in einem folgenden Verfahrensschritt die Partikel des Pulvers mit der Oberfläche des Wischgummis 2 verbunden, insbesondere durch ein anvulkanisieren der aufgetragenen Partikel durch Erhitzen, vorzugsweise in einem Ofen, mittels IR-Heizung oder dergleichen.

Ebenso ist es möglich, die aufgebrachten Partikel mittels eines Trägers mit der Oberfläche des Wischgummis 2 zu verbinden. Vorzugsweise wird ein Klebstoff auf die mit den Partikeln beschichtete Oberfläche aufgebracht, wodurch eine dauerhafte Verbindung zwischen Partikeln 4 und Wischgummi erreicht wird. Wahlweise können die Partikel 4 in einem Klebemittel dispergiert werden und die dadurch erhaltene Suspension in geeigneter Weise auf die Oberfläche aufgebracht werden. Dadurch wird eine stabile Oberflächenbeschichtung des Wischgummis 2 erzielt. Möglich ist auch, die Partikel 4 auf die Oberfläche des Wischgummis 2 mit einer gewissen Geschwindigkeit auftreffen zu lassen, so dass diese bis zu einer gewissen Tiefe in das elastomere Material eines nicht vulkanisierten Gummis eindringen. Alternativ kann die zu beschichtende Oberfläche des Wischgummis 2 erhitzt werden, um eine stabile kontinuierliche Klebekraft des elastomeren Materials des Wischgummis 2 zu erzielen. Eine weitere Möglichkeit für eine Verbindung der aufgebrachten Partikel 4 mit der Oberfläche des Wischgummis 2 ist das mechanische Anpressen der Partikel 4, beispielsweise durch Andruckrollen, welche vorzugsweise beheizt gegen die mit Partikeln belegte Oberfläche gedrückt werden, so dass die Partikel 4 mit der Wischgummioberfläche verbunden werden.

Es ist möglich, die Partikel vorzugsweise vor dem Vulkanisieren auf das extrudierte oder gegossene Gummimaterial aufzubringen, so dass bei der nachfolgenden Vulkanisation des beschichteten Gummimaterials die aufgebrachten Partikel 4 auf die Oberfläche aufvulkanisiert werden, während das elastomere Material vulkanisiert. Vorteilhafterweise ist die Wischgummioberfläche unmittelbar nach dem Extrudieren bzw. Spritzgießen nicht oder nur geringfügig verschmutzt, wodurch die Haftbedingungen auf der Oberfläche verbessert sind. So kann eine gleichförmige Beschichtung erzielt werden, unter gleichzeitiger Reduzierung der Verfahrensschritte zur Herstellung eines Wischgummis 2. Auch eine Auftragung der Partikel 4 auf eine nur teilweise vulkanisierte Wischgummioberfläche ist möglich. Hierbei wird der Vulkanisierungsvorgang des Wischgummis 2 unterbrochen, die Partikel 4 werden in geeigneter Weise aufgebracht und der Vulkanisierungsvorgang des nunmehr beschichteten Wischgummis 2 entsprechend weiter fortgesetzt.

Gemäß einer erfindungsgemäßen Ausführungsform kann auf die Oberfläche des Wischgummis 2 eine Folie aufgebracht werden, um eine hydrophobe und strukturierte Oberflächenschicht zu erreichen. Die Folie aus thermoplastischen Materialien, beispielsweise Polyethylen, Polyamid, Polypropylen oder Polytetrafluorethylen, welche gegebenenfalls auch vernetzt oder nur teilweise vernetzt eingesetzt werden, kann mittels eines geeigneten Klebstoffs, beispielsweise eines Epoxyamin-Klebstoffs aufgebracht werden. Vorzugsweise ist die Folie als selbstklebende Folie ausgebildet, die an einer Unterseite mit einer Beschichtung aus einem Klebemittel versehen ist und an einer Oberseite entsprechend der Erfindung hydrophob und strukturiert ist. In einer vorteilhaften Ausführungsform kann die Folie vor dem eigentlichen Vulkanisationsschritts des Wischgummimaterials auf dessen Oberfläche aufgebracht werden. Durch die Einwirkung von Wärme während dem anschließenden Vulkanisationsschritts wird die Folie auf die Oberfläche des Wischgummis 2 aufvulkanisiert bzw. aufgeschmolzen. Alternativ kann die Folie auf eine schon teilvulkanisierte Oberfläche aufgebracht werden, d.h. dass das Wischgummi 2 nach einer gewissen Vulkanisierungszeit aus einer Wärmeeinrichtung entfernt wird, nach der es nur teilweise vulkanisiert ist.

Zur Erzielung der erfindungsgemäßen Oberfläche des Wischgummis 2, d.h. zur Erzielung der hydrophoben Eigenschaft und der Strukturierung der Oberfläche im Mikrometerbereich, kann die aufzubringende Folie beispielsweise strukturiert sein. Vorzugsweise kann die aufgebrachte Folie in einem nachfolgenden Prozessschritt weiter strukturiert werden, so dass die entsprechenden Erhebungen bzw. Vertiefungen im Mikrometerbereich zur Annäherung an den Lotuseffektes entstehen. Dieser nachfolgende Prozessschritt umfasst beispielsweise eine Ablation durch Laserpulsation oder eine Behandlung des Wischgummis, wobei das Wischgummimaterial sich elastisch verformt, während das Beschichtungsmaterial selbst plastisch verformt wird.

Alternativ kann die aufzubringende Folie, entsprechend der angestrebten Oberflächestrukturierung perforiert sein. Dies kann beispielsweise durch ein Laserschnittverfahren erzielt werden, so dass Vertiefungen entstehen, die im Mittel eine Höhe von kleiner als 100 µm, vorzugsweise kleiner als 50 µm aufweisen. Der Abstand der Vertiefungen zueinander liegt zwischen 1 und 200 µm, bevorzugt zwischen 1 und 100 µm.

Mit der vorliegenden Erfindung besteht die Möglichkeit, dass das Wischgummi 2 sowohl auf hydrophilen Windschutzscheiben (Klarglas) als auch auf solchen verwendet werden kann, die mit einem Wasserabweisenden Mittel behandelt wurden (hydrophobe Scheibe).

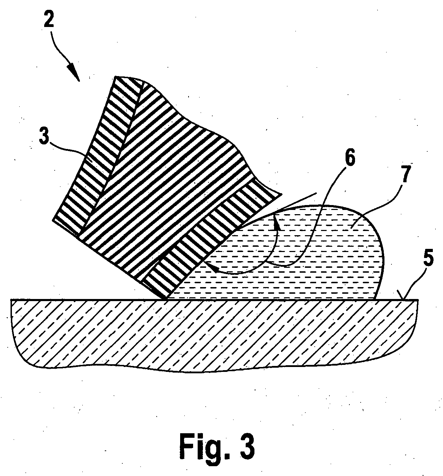

In Figur 3 ist verdeutlicht, wie sich im Einsatz eines erfindungsgemäßen Wischgummis 2 auf einer hydrophoben Fläche 5, beispielsweise einer Glasscheibe eines Kraftfahrzeuges, die hydrophobe und strukturierte Oberflächenschicht 3 auf das Wischverhalten auswirkt. Der Kontaktwinkel 6 zwischen der hydrophoben Oberflächenschicht 3 und Wasser 7 ist hierbei größer 120°, wodurch Wasser effektiv von der Glasscheibe entfernt werden kann, da das Wischgummi 2 selbst nicht benetzt wird.

## Patentansprüche

1. Wischgummi für einen Scheibenwischer, insbesondere für einen Scheibenwischer eines Kraftfahrzeuges, aus einem geformten, vulkanisierbaren elastomeren Material, wobei die Oberfläche des Wischgummis (2) eine Oberflächenschicht (3) aufweist, welche hydrophob ist mit. einem Kontaktwinkel gegenüber Wasser größer 90°, bevorzugt größer 120° und einer Oberflächenstruktur mit Erhebungen und/oder Vertiefungen im Mikrometerbereich und aus Partikeln (4) gebildet ist, **dadurch gekennzeichnet, dass** das Material der Partikel (4) der Oberflächenschicht (3) Polyamid ist.

2. Wischgummi nach einem der Ansprüche 1 oder 2, **dadurch gekennzeichnet, dass** die Oberflächenschicht (3) aus Partikeln (4) mit einer mittleren Partikelgröße von weniger als 100 µm, bevorzugt weniger als 50 µm gebildet ist.

3. Verfahren zur Herstellung eines Wischgummis für einen Scheibenwischer, insbesondere einen Scheibenwischer eines Kraftfahrzeuges, wobei das Wischgummi (2) durch Vulkanisation eines geformten elastomeren Material gebildet wird, **dadurch gekennzeichnet, dass** mindestens die Schritte umfasst sind:
a) Aufbringen von Partikeln (4) in Form einer Oberflächenschicht (3) auf die Oberfläche des Wischgummis (2), wobei die Partikel (4) eine mittlere Partikelgröße kleiner als 100 µm, bevorzugt kleiner als 50 µm aufweisen; und wobei das Material der Partikel (4) Polyamid ist.
b) Verbinden der in Form einer Oberflächenschicht (3) aufgebrachten Partikel (4) mit der Oberfläche des Wischgummis (2).

4. Verfahren nach Anspruch 3, **dadurch gekennzeichnet, dass** die Partikel (4) auf eine erwärmte Oberfläche des Wischgummis (2) aufgebracht werden.

5. Verfahren nach Anspruch 3 oder 4, **dadurch gekennzeichnet, dass** vor dem Aufbringen der Partikel (4) ein Träger auf die Oberfläche des Wischgummis (2) aufgetragen wird, an dem die Partikel (4) haften.

6. Verfahren nach Anspruch 3 oder 4, **dadurch gekennzeichnet, dass** die Partikel (4) mit einem Primer gemischt auf die Oberfläche des Wischgummis (2) aufgebracht werden, welcher die Haftung der Partikel (4) auf der Oberfläche des Wischgummis (2) verstärkt.

7. Verfahren nach einem der Ansprüche 3 bis 6, **dadurch gekennzeichnet, dass** die in Form einer Oberflächenschicht (3) aufgebrachten Partikel (4) durch einen Vulkanisationsschritt mit der Oberfläche des Wischgummis (2) chemisch verbunden werden.

8. Verfahren nach einem der Ansprüche 3 bis 6, **dadurch gekennzeichnet, dass** die in Form einer Oberflächenschicht (3) aufgebrachten Partikel (4) mit der Oberfläche des Wischgummis (2) durch Druck mechanisch verbunden werden.

## Claims

1. Wiper blade rubber for a windshield wiper, in particular for a windshield wiper of a motor vehicle, composed of a molded, vulcanizable elastomeric material, where the surface of the wiper blade rubber (2) has a surface layer (3) which is hydrophobic with a contact angle greater than 90° with respect to water, preferably greater than 120°, and with a surface structure with elevations and/or depressions in the micrometer range and has been formed from particles (4), **characterized in that** the material of the particles (4) of the surface layer (3) is polyamide.

2. Wiper blade rubber according to either of Claims 1 and 2, **characterized in that** the surface layer (3) has been formed from particles (4) with an average particle size of less than 100 µm, preferably less than 50 µm.

3. Process for the production of a wiper blade rubber for a windshield wiper, in particular a windshield wiper of a motor vehicle, where the wiper blade rubber (2) is formed via vulcanization of a molded elastomeric material, **characterized in that** at least the following steps are encompassed:
a) application of particles (4) in the form of a surface layer (3) to the surface of the wiper blade rubber (2), where the particles (4) have an average particle size smaller than 100 µm, preferably smaller than 50 µm; and where the material of the particles (4) is polyamide.
b) bonding, to the surface of the wiper blade rubber (2), of the particles (4) applied in the form of a surface layer (3).

4. Process according to Claim 3, **characterized in that** the particles (4) are applied to a heated surface of the wiper blade rubber (2).

5. Process according to Claim 3 or 4, **characterized in that**, prior to the application of the particles (4), a carrier, to which the particles (4) adhere, is applied to the surface of the wiper blade rubber (2).

6. Process according to Claim 3 or 4, **characterized in that** the form in which the particles (4) are applied to the surface of the wiper blade rubber (2) is that of a mixture with a primer, and the primer increases the adhesion of the particles (4) on the surface of the wiper blade rubber (2).

7. Process according to any of Claims 3 to 6, **characterized in that** the particles (4) applied in the form of a surface layer (3) are chemically bonded to the surface of the wiper blade rubber (2) via a vulcanization step.

8. Process according to any of Claims 3 to 6, **characterized in that** the particles (4) applied in the form of a surface layer (3) are mechanically bonded to the surface of the wiper blade rubber (2) via pressure.

## Revendications

1. Lame en caoutchouc pour essuie-glace, notamment pour essuie-glace de véhicule automobile, en un matériau élastomère vulcanisable façonné, la surface de la lame en caoutchouc (2) comprenant une couche de surface (3) qui est hydrophobe et présente un angle de contact avec l'eau supérieur à 90°, de préférence supérieur à 120°, et une structure de surface comprenant des élévations et/ou des creux dans la plage micrométrique, et est formée par des particules (4), **caractérisée en ce que** le matériau des particules (4) de la couche de surface (3) est le polyamide.

2. Lame en caoutchouc selon l'une des revendications 1 et 2, **caractérisée en ce que** la couche de surface (3) est formée par des particules (4) ayant une taille de particule moyenne de moins de 100 µm, de préférence de moins de 50 µm.

3. Procédé de fabrication d'une lame en caoutchouc pour essuie-glace, notamment pour essuie-glace de véhicule automobile, selon lequel la lame en caoutchouc (2) est formée par vulcanisation d'un matériau élastomère façonné, **caractérisé en ce qu'**au moins les étapes suivantes sont comprises :
a) l'application de particules (4) sous la forme d'une couche de surface (3) sur la surface de la lame en caoutchouc (2), les particules (4) présentant une taille de particule moyenne de moins de 100 µm, de préférence de moins de 50 µm ; et le matériau des particules (4) étant le polyamide,
b) la liaison des particules (4) appliquées sous la forme d'une couche de surface (3) avec la surface de la lame en caoutchouc (2).

4. Procédé selon la revendication 3, **caractérisé en ce que** les particules (4) sont appliquées sur une surface chauffée de la lame en caoutchouc (2).

5. Procédé selon la revendication 3 ou 4, **caractérisé en ce qu'**un support auquel les particules (4) adhèrent est appliqué sur la surface de la lame en caoutchouc (2) avant l'application des particules (4).

6. Procédé selon la revendication 3 ou 4, **caractérisé en ce que** les particules (4) sont appliquées sur la surface de la lame en caoutchouc (2) mélangées avec une amorce qui renforce l'adhésion des particules (4) sur la surface de la lame en caoutchouc (2).

7. Procédé selon l'une quelconque des revendications 3 à 6, **caractérisé en ce que** les particules (4) appliquées sous la forme d'une couche de surface (3) sont reliées chimiquement par une étape de vulcanisation avec la surface de la lame en caoutchouc (2) .

8. Procédé selon l'une quelconque des revendications 3 à 6, **caractérisé en ce que** les particules (4) appliquées sous la forme d'une couche de surface (3) sont reliées sont reliées mécaniquement avec la surface de la lame en caoutchouc (2) par pression.
